# EUROPEAN PATENT APPLICATION

(11) **EP 1 843 591 A1**
(43) Date of publication of application: **10.10.2007**
(21) Application number: 06251932.7
(22) Date of filing: 05.04.2006
(51) Int. Cl.: H04N 7/24

(54) **Intelligent media content playing device with user attention detection, corresponding method and carrier medium**

(71) Applicant: British Telecommunications Public Limited Company, London EC1A 7AJ (GB)
(72) Inventor: The designation of the inventor has not yet been filed
(74) Representative: Williamson, Simeon Paul

(57) **Abstract**

The present invention relates to providing intelligent user control options for consuming media content such as video images to one or more viewers. The present invention provides an apparatus for playing media content, and comprising: means for detecting a face (110, 115); means for playing the media content and associating the media content being played with a play index (130); means for storing the play index of the media content being played in response to detecting the absence of previously detected face (240); means for generating a user interface (140, 145) in response to detecting a face following the detection of the absence of a face; wherein the playing means is arranged to re-play at least a part of the media content depending on the stored play index in response to receiving a user input from the user interface.

## Description

### Field of the Invention

The present invention relates to providing intelligent user control options for consuming media content such as video images to one or more viewers.

### Background of the Invention

Equipment for providing media content such as video images are well known and include the video cassette recorder (VCR), digital video disc players (DVD), hard disc drive based recorders (HDD), terrestrial, cable and satellite TV set top boxes coupled to a viewing device such as a television set (TV). Increasingly personal computers are also being used to provide media content, and may include DVD disc readers, TV tuner capture cards, and Internet file download and streaming facilities for example to enable Video on Demand (VoD) services.

However the world is a distracting place and this equipment is generally not designed to accommodate this in an efficient and user friendly manner. For example, a distraction such as a phone call or the door-bell ringing during playback of a DVD may necessitate the viewer manually rewinding to media content at the point of interruption in order to continue viewing without missing any of this content. Recent advances in video content recording using HDD devices such as TiVo^{™} allow a user to press a "pause" button during a live broadcast in order to accommodate an interruption. When the viewer returns, the HDD has started recording the missed content so that the user can return to watching the video content from the interruption time by pressing a "continue" button for example.

WO2004084054 describes an attempt to automate such facilities by utilising an eye gaze attention recognition system which detects when a viewer's pupils are directed at a viewing screen. Detection of attention or non-attention can then be used to pause playback of media content. However such an arrangement requires expensive eye gaze detection equipment which also requires a light source to illuminate the pupils of the viewer.

### Summary of the Invention

The present invention provides user media content control options automatically based on a face detection system or other means of detecting user attention states. It has been found that detection of a face directed towards a viewing screen is surprisingly highly indicative of user attention. Although people do look out of the corners of their eyes, this is typically followed shortly afterwards by reorienting the head in the same direction. Also face detection is simpler than tracking eye gaze and does not require expensive pupil tracking mechanisms. Furthermore because the face is larger than the eyes, the detection equipment does not need to be as sensitive and can detect its targets at a greater distance than eye tracking. This is especially useful in informal viewing situations such as a number of viewers in a lounge watching a TV screen from a distance, perhaps up to 5 metres, rather than a single viewer up close to a computer monitor for example. Face detection can be implemented using cheap off-the-shelf equipment such as a web-cam and readily available computer software. When the absence of an attentive face is detected, the system notes or stores a play or distraction index or time (eg media content duration so far) for the media content being played, and continues to play the media content. When an attentive face is then (re)detected, the system offers the viewer various viewing control options based on the noted play index. This can be implemented as a user interface for example a graphical user interface superimposed over the playing media content in the form of a user message and/or user actuable soft screen button. The user may then choose to continue playing the media content by ignoring the generated user interface, or to "rewind" the media content by actuating or operating the user interface so that the media content re-plays from the noted play index. Various other user control options are contemplated including viewing a "summary" of the missed content.

By providing the user with play options such as "rewind" rather than automatically pausing upon detection of user non-attention, the system provides a more user friendly control interface than other known approaches. There is no unnecessary pausing and instead a user interface or control option is provided. In some situations a user may be happy for the media content to continue playing rather than pausing even if they are interrupted, for example when momentarily discussing the content with a fellow viewer or during ad breaks. Furthermore a high number of (unnecessary) pauses can be annoying for the viewer and this is exacerbated where these are based on false detection of a user non-attention state. Furthermore it has been estimated that there are typically less false positives (ie detection that the user has looked away when in fact they haven't) with face detection than pupil tracking for example, and even when false positives are detected the impact of them is less annoying for the user.

In an embodiment, a web cam or other digital camera apparatus and face detection software are used in conjunction with computer equipment arranged to play media content. The face detection software used in an embodiment is based on an algorithm disclosed in Wu J., Rehg J. M., Mullin M. D. (2004) Learning a Rare Event Detection Cascade by Direct Feature Selection, Advances in Neural Information Processing Systems vol.16 - see also http://www.cc.gatech.edu/~wujx/research.htm. However other face detection software could alternatively be used, for example Mobile-I available from Neven Vision. The web cam and face detection software detects a face, and the computer plays the media content such as a movie. When the user leaves the computer screen to answer the phone for example, the absence of a face is detected and used by the computer to store the current play index of the movie. When the user returns to the viewing screen of the computer, a face is detected which triggers the computer to display a "rewind" button on the screen. If this is actuated by the user for example by pressing a button on a remote control device, the computer stops the current playing of the movie and restarts playing from the stored play index (or shortly before this); otherwise the rewind button disappears from the display after a brief period and the movie continues to play uninterrupted.

In another embodiment, the face detection software and/or computer are arranged to identify detected faces for example by associating an identifier with each detected face. Then when a user returns to view the screen, the system detects the new face and recognises it as a previously identified face and displays an appropriate or personalised control option for that user. For example the returned user may be offered a summary of the content missed either on the entire screen or in a corner of the screen with the main content continuing to play in the background. As a further alternative, the summary may be offered on a separate personal device, for example a PDA or phone.

When detecting whether a face is present/attentive or not, the system can be configured to receive multiple face detection outputs or readings before basing a decision on those inputs in order to minimise the likelihood of false positives or false negatives - that is determinations that the user is looking away when in fact they are attentive. This means that say one reading that a user is non-attentive amongst say 10 readings that the user is attentive can be ignored, and the system simply responds to the user being attentive. This also allows some flexibility to be built into the system, for example allowing a user brief distractions (eg a brief look at another user) without generating the user interface.

In other embodiments different mechanisms for detecting user attention can be used, for example eye tracking rather than face detection, and even presence detections systems using for example infra-red sensors.

In one aspect there is provided apparatus for playing media content, and which is arranged to offer smart media content consumption (for example viewing or listening) options including rewinding to a point where consumption was interrupted. The apparatus includes means for detecting a face such as a camera and a face detection system or software executed on a processing platform such as a computer or set-top box. The apparatus also comprises means for playing the media content and associating the media content being played with a play index; examples include a DVD player which includes a play index or a streaming media client. The apparatus (for example the processing platform) is arranged to store the play index of the media content being played in response to detecting the absence of a previously detected face. The apparatus further comprises means for generating a user interface in response to detecting a face following the detection of the absence of a face. This may be a displayed message with a user control input facility such as a remote control device or soft button on the display showing the played media.

If no user input is received, the user interface is deactivated, for example the displayed message is deleted. If however a user input is received through the user interface, the playing means is arranged to re-play at least a part of the media content depending on the stored play index in response to receiving a user input from the user interface. For example the missed content may be replayed from the stored play index, or a play index dependent on this such as a few seconds before.

The user interface may be implemented by generating a user alert such as a displayed message or audible sound, and facilitating the generation of a control signal in response to the user input, wherein the apparatus is responsive to the control signal to instruct the playing means to re-play the at least a part of the media content. Facilitation of the control signal may be achieved by monitoring incoming remote control signals for a predetermined signal for example.

In an embodiment, the apparatus also comprises a face recogniser which may be implemented using face recognition software executed on the processing platform. The face recogniser maintains a database of faces so that it can either recognise and identify a newly detected face, or add this to the database together with an identifier which can be used with the rest of the system. The face recogniser can be used to recognise a particular recently absent face in order to offer a personal service such as offering to provide a summary of content that user has missed when there are a number of users or viewers using the system.

There is also provided a method of playing media content such as a movie and having a play index, the method comprising playing the media content in response to detecting a face, and storing the current play index in response to detecting the absence of a previously detected face. In some embodiments there is no need to recognise the absent face, it is enough that previously there was one face detected, then it was not detected (absent). The method further comprises generating a user interface associated with the stored play index in response to detecting a face. Again there is no requirement for recognising this face, merely that a face has again been detected.

In an embodiment, the method further comprises further comprising re-playing at least part of the media content depending on the stored play index in response to receiving a user input from the generated user interface. If no user input is received, the user interface is no longer generated after a short time.

In an embodiment the method further comprises identifying each detected face and wherein a personalised user interface is generated each time a previously absent identified face is again recognised .

In another aspect there is also provided a method of playing media, the method comprising: playing the media content in response to detecting a face; pausing the media content in response to detecting the absence of a detected face; resuming playing the media content in response to again detecting a face.

### Brief Description of the Drawings

Embodiments will now be described with reference to the following drawings, by way of example only and without intending to be limiting, in which:
Figure 1 is a schematic showing a system according to an embodiment;
Figure 2 is a flow chart illustrating a method according to an embodiment; and
Figure 3 is a flow chart illustrating a method according to an embodiment.

### Detailed Description

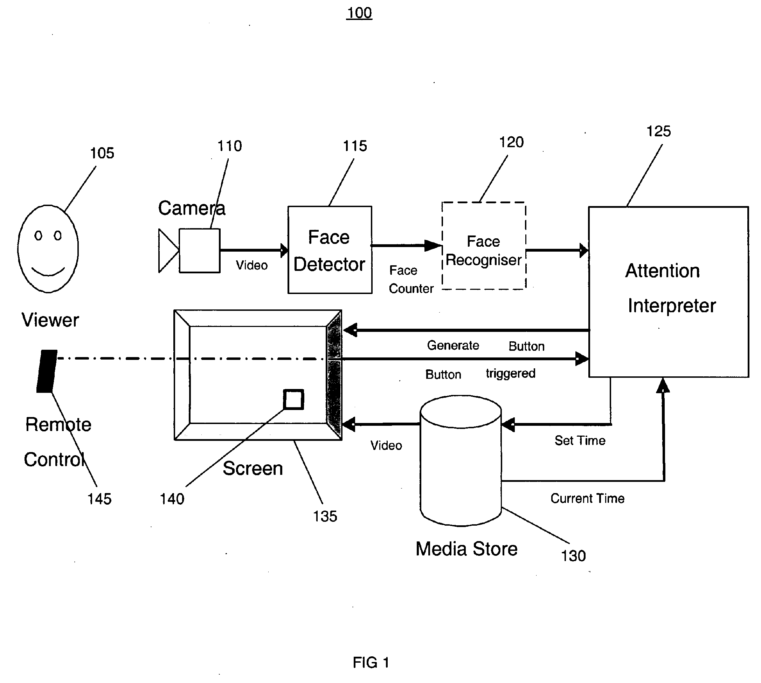

Figure 1 illustrates a system according to an embodiment, the system 100 comprising a user's face 105, a camera 110 or viewing equipment such as a web cam or other camera, a face detector 115, optionally a face recogniser 120, an attention interpreter 125, a media store 130 such as a DVD player containing video content such as a movie, a viewing screen 135, a user interface message display 140 (and optionally a user actuable soft button), and a user input device 145 such as a remote control unit. The face detector 115, face recogniser 120, and attention interpreter 125 are typically implemented as software executed on a computing platform such as a personal computer or dedicated video content equipment such as a DVD player or set-top box. The viewing screen 135 may be part of the computing platform, or a stand-alone device such as a plasma-TV screen for example. The Media Store may be a buffer for streamed content, or may exist remotely over a network - eg Video on Demand (VoD).

The camera 110 is arranged to capture images pointing away from the viewing screen 135 in order to "see" user faces 105 viewing the viewing screen. Typically the camera 110 will be positioned at right angles to the plane of the viewing screen 135. The camera can be arranged such that the viewing angle of the screen and the camera's field of view are largely coincident; and this may be accomplished with additional lenses if necessary. Video or still images from the camera 110 are directed to the face detector 115, which may be implemented using various well known software packages on a computing or processor platform. Examples of face detection algorithms include: Wu et al (2004), modules of the Neven Vision's Mobile-I™ face recognition software developer's kit (SDK)*;Detecting Faces in Images : A Survey, Ming-Hsuan Yang, David J.Kriegman and* Detecting Faces in Images: A Survey, Ming-Hsuan Yang, David J. Kriegman and Narendra Ahuja- http//vision.ai.uiuc.edu/mhyang/papers/pami02a.pdf*;* C-VIS Computer Vision and Automation GmbH Face Snap or similar technologies. These and similar packages may be either configured simply for face detection (115) or additionally for face recognition (120). The face detector function 115 simply reports whether a face has been detected or how many faces are currently detected within the field of view of the camera 110. The face recogniser function 120 either adds a new detected face to a database of recognised faces, or notes a match between a detected face and a face recorded in the database. The database may be temporary and used only for each media content playing session - such as each movie viewing. This is because a different set of faces may watch a different movie. Alternatively the database may collect face identities from multiple media content playing sessions, to offer personalised services to regular viewers. Examples might include providing summaries or rewinds for individual viewers depending on content that they personally have missed.

Various technologies are available for implementing face recognition, for example the Mobile-I^{™} approach uses Gabor Wavelets to locate individual facial features and to graph the geometry of interconnecting features, this is constructed for each face and can then be matched against the faces in the database. Whilst the specific operations of this software are beyond the scope of this discussion, this is described in more detail in Johannes Steffens, Egor Elagin, Hartmut Neven: PersonSpotter - Fast and Robust System for Human Detection, Tracking and Recognition. FG 1998: 516-521 - see http://ieeexplore.ieee.org/ie14/5501/14786/00671000.pdf?arnumber=671000. Another well known approach is that of using Eigenfaces which takes each original facial image and uses a pre-calculated set of base images (each is an Eigenface) in different combinations to create a best fit for the particular original image. The face can then be identified by referring to its combination of pre-determined Eigenfaces. This is described in more detail in M. Turk and A. Pentland, "Eigenfaces for Recognition," Journal of Cognitive Neuroscience, vol. 3, pp. 71-86, 1991 - see http://www.cs.ucsb.edu/~murk/Papers/jcn.pdf.

The Mobile-I ^{™} and some of the other packages attempt to identify faces from any angle, and the system when using these packages can benefit from further identifying "looking ahead" faces, that is only faces that are looking directly (0 degrees) at the screen 135 or within a certain range of angles, for example up to say 20 degrees. Various algorithms are available to supplement the basic face recognition packages, including for example that discussed in Wu J., Rehg J. M., Mullin M. D. (2004) Learning a Rare Event Detection Cascade by Direct Feature Selection, Advances in Neural Information Processing Systems vol. 16 - see also http://www.cc.gatech.edu/~wujx/research.htm.

In this embodiment, the Wu et al algorithm can be configured to detect only "face-on" faces by training it only on face-on examples. From these examples it learns its own rules and these pre-learnt rules can then be used to only detect new faces when they are face-on. This algorithm then gives the location of a rectangle within the camera image that contains the face. In order to integrate this with the Neven Mobile-I system, this result is feed directly into the Mobile-I Pre-selector stage (see figure, page 2, Steffen et al). This software package is therefore configured to detect faces that are, or filter out faces that are not, "face-on" or attentive and then feed these results on to the face recognizer 120. In an alternative embodiment there may be no restriction on the orientation of detected faces, merely whether faces are detected or not.

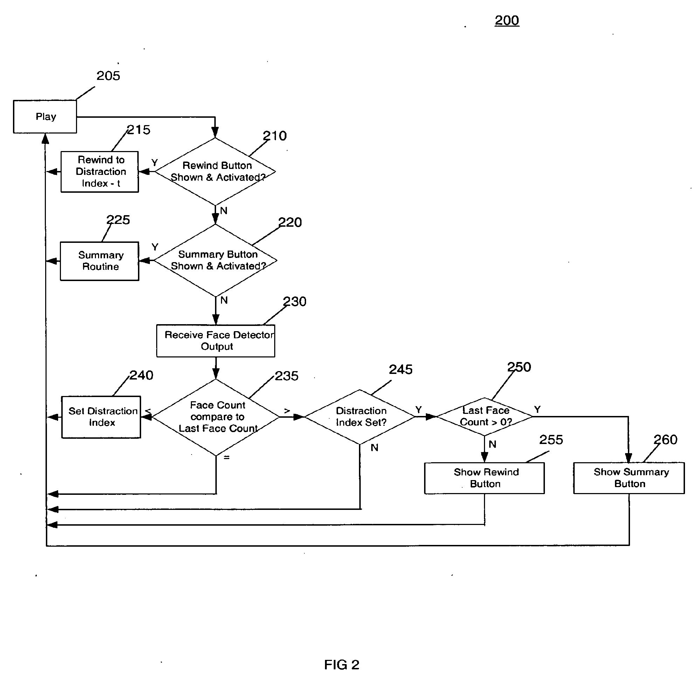

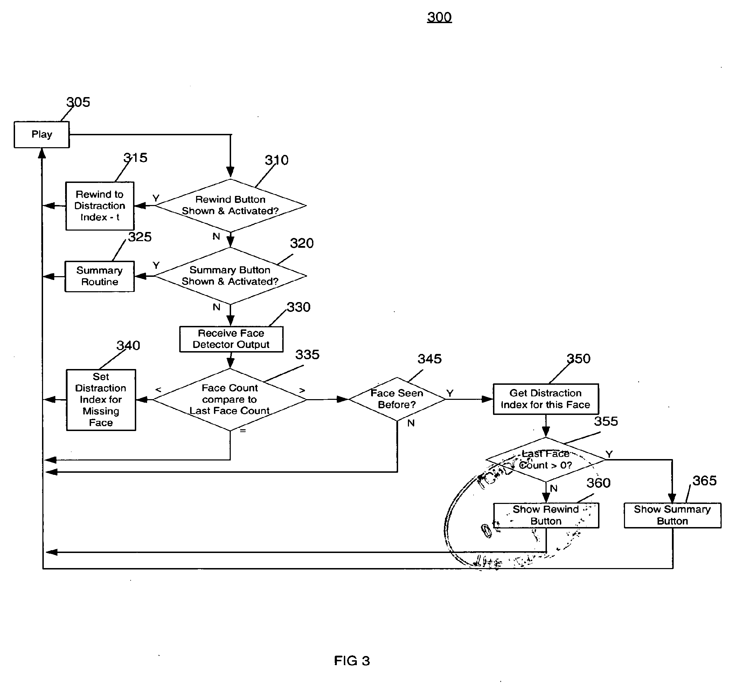

Whichever face detector 115 and optionally face recognition 120 package is used, these will provide number of detected faces (115) and if used identifiers for each detected face (120) as outputs to the attention interpreter 125. The attention interpreter 125 interprets the outputs of the face detector 115 and face recogniser 120 as user (105) attention states, and controls operation of the media store and a user interface (140, 145) accordingly. The attention interpreter 125 is typically implemented as a routine in a computing or processor based device, and two embodiments of this function (125) are illustrated in figures 2 and 3 and described in greater detail below.

The attention interpreter 125 controls playing of the media store 130 for example playing, and rewinding of a movie played on a DVD player. In addition the attention interpreter 125 generates a user interface with the user 105 in order to allow the user to control operation of the media store dependent on the user's attention status as interpreted by the attention interpreter 125. In the embodiment illustrated, the attention interpreter 125 generates a user message display or user alert 140 on the viewing screen 135 superimposed on the content displayed on the screen by the media store 130. This could be provided in a new pop-up window on a Microsoft Windows^{™} based computer for example, but typically with an overlaid graphic. The user display or alert 140 could be provided with a soft button or icon actuable by a computer mouse for example, or simply as a message to operate a remote control device 145 in a particular way. As a further alternative, the user alert 140 could simply be indicated using a suitable LED, a sound or some other user alerting mechanism, on the screen apparatus 135 or even on another device. The user alert is only shown (or sounded) on the screen apparatus for a short period, allowing it to be ignored.

A user control input is also enabled to allow the user to activate a predetermined control on the remote control device 145 for example, and which is interpreted by the attention interpreter 125. The user control input may be enabled using a dedicated button or control on the remote control device 145 which is only used for the "smart rewind" or other smart functions provided by the system 100. Alternatively, a standard function control or button such as the rewind control may be disabled for the media store 130 and instead enabled for the attention interpreter 125 in response to display of the displayed user control input 140. For example coloured buttons may be used together with the user alert "press red button to replay what I missed". This may be achieved using re-programmable remote control devices 145, and a suitably controlled computing platform hosting the attention interpreter 125 and media store 130 functions, or by suitable modification to legacy or new content players such as set-top boxes. Alternatively the user control input may be a mouse click whilst the cursor is positioned over the soft button 140. As noted, the user control input mechanism need not be a remote control device 145 as typically used with a TV set or other audio-visual provisioning equipment (eg DVD players), but could be integral with this equipment. Either way the user control input is used to record a user input in response to the user alert 140, which generates a control signal (button triggered) or message which causes the attention interpreter 125 to control the media store in predetermined ways.

As a further alternative, the camera could be used to facilitate gesture recognition as a means of user input control. A current example of this technology is provided by the Sony EyeToy.

The attention interpreter 125 is arranged to provide certain "smart" control options available to the user 105 in response to detecting a change in the user's attention status - for example that the user has returned to an attentive state following a period of non-attention. This particular example may correspond to the user watching a movie played by the media store 130 on the viewing screen 135, the user being interrupted for example by a phone call and moving or looking away from the screen 135, then looking back to the screen following completion of the phone call. In the meantime the movie has continued playing so that the user has missed some of the content. The attention interpreter 125 then offers the user the opportunity to rewind to the content playing when the user first looked away from the screen (a non-attention status) and to replay the content from this point. It may be desirable to configure the system to rewind slightly prior to this time in order to ensure continuity - say one or two seconds before the stored play index. other configurations are also possible in which the re-play starting point is dependent on the stored play index - for example a selectable number of seconds before or after the stored play or distraction index. This is implemented by generating the user control input interface comprising in this embodiment a user alert message 140 on the viewing screen 135, and a receiving an appropriate control input from the user via the remote control device 145. The media store 130 is then commanded by the attention interpreter 135 to rewind to this point (or slightly before for example) and start replaying.

Alternative or additional "smart" user control options may be provided, for example a summary of the missed content. This may be implemented simply as a faster playing of the missed content until this catches up with the current played content, or only playing some of the frames of the content - for example every 10^{th} frame. This may be provided on the full size of the viewing screen, or in a smaller window with the currently playing content in the background. Alternatively the summary content may be provided by a third party content provider such as a broadcaster for example.

Figure 2 illustrates a method of operating the attention interpreter 125 for this situation in more detail. In the method (200), a distraction or play index is maintained which corresponds to the position or time in the playing of content when the user became non-attentive - for example looking or moving away from the viewing screen 135. Typically a media store 130 or the content itself such as a DVD movie will incorporate its own play index, for example to indicate that hour: 1, minute: 12 and second:45 of a movie is currently being played. However media store 100 and/or attention interpreter 125 may be configured to associate an independent play index with the content if it does not come already integrated in order to perform the method.

Referring to figure 2, the play step (205) indicates that the media store 130 is playing the content. The method (200) then determines whether the rewind button 140 has been shown on the screen 135 and activated by the user on the remote control device 145 (210). If this is the case (210Y), then the media store 130 is instructed to rewind the content to a previously stored distraction or play index (215) before continuing to play the content (205). Otherwise (210N), the method determines whether a summary (or other smart content control function) button has been shown and activated (220). If this is the case (220Y), a summary routine is invoked (225) before continuing to play the content (205). As noted above, the summary function or routine may simply involve playing the missed content (between the stored distraction or play index and the current play index) at an increased speed within a reduced size window of the screen 135. Otherwise (220N), the method receives the output from the face detector 115 (230).

The face detector output will typically just be the number of faces detected within the camera's field of view - thus if there is only one user the outputs will be 1 for an attentive state or 0 for a non-attentive (looking away or absent) state. The number of faces detected corresponds to a face count parameter for each unit time or camera image. The method then determines whether the current face count is less than, equal to, or greater than a previous face count (235). If the face count is less than the previous face count (235<), this corresponds to a user looking away from the screen (becoming non-attentive) and the distraction or play index is set or stored (240), and then content continues to play (205). In this step (240), the attention interpreter 125 queries the media store's current play index and stores this, for example as a distraction index. If the face count is equal to the previous face count (235=) the attention status of the user has not changed and the content continues to play (205). If the face count is greater than the last face count (235>) this corresponds to a user returning to watch the screen (a new or returning attentive user), and the method determines if the distraction index is set (245) or in other words that a play index has been stored.

If the distraction index is not set (245N), this corresponds to a new user watching the content, in addition to an existing user. In this case the content continues to play (205) without offering user content control options. As an alternative, an option to rewind to the beginning of the content might be offered if the current position of the playing content is close to the beginning (eg the current play index is below a threshold). This situation might correspond to a friend arriving to join the initial user shortly after the start of the content. As a further alternative a summary option might be offered. If the distraction index is set (245Y), this corresponds to a user having already watched some of the content returning to watch the content after a period of non-attentiveness.

In this case, the method then determines whether the last face count was greater than zero (250). If this is not the case (250N), this means there is only one user to consider, and the rewind button is shown (255). The method then returns to continue playing the content (205) and determines any user response to the rewind button at step (210) as previously described. If the last face count was greater than zero (250Y), this means that an additional user has returned to view the screen 135 so that for example there are now two or more users watching the screen. Upon detecting this new attentive face, the method shows the summary button (260) before returning to continue playing the content (205).

Determining whether the summary button has been actuated is then carried out at step (220) as previously described.

The following example situation further illustrates the effect of this method. Andrew sits down to watch a live football match on television, he watches for five minutes when he is interrupted by a telephone call from his friend Ben. The conversation lasts for two minutes, before Andrew starts watching again, the television offers to rewind the match to where he left off. He opts not to rewind as he can see there is no score. After ten minutes Ben comes over and watches the match with him. The television offers to play a short summary of the match so far, so that he can catch up.

In the first case, after the telephone call, the system operates to provide the rewind button option. In the second case, when Ben arrives, the Face Detector counts two faces in the scene instead of one and the Attention Interpreter has a new rule for seeing more than one faces at once which triggers the automatic summarisation function.

Figure 3 illustrates a method of operating the attention interpreter 125 according to another embodiment which utilises the face recogniser function 120. In this situation the method recognises the faces rather than just counting them and making certain assumptions about their identity as in the method of figure 2. In the method (300) of figure 3, a distraction or play index is maintained for each recognised face. As with the previous method (200), the play step (305) indicates that the media store 130 is playing the content. The method (300) of figure 3 then proceeds in the same manner as the method (200) of figure 2, rewinding (315) in response to detecting activation of a rewind button (310) and activating the summary routine (325) in response to detecting activation of the summary button (320).

Although not explicitly shown, the attention interpreter 125 also receives an identifier with each face detected from the face recogniser 120. This may be simply a number assigned to each recognised face and stored in a database. Each identifier or number has its own associated stored play or distraction index corresponding to the respective user.

As with the previous method, the present method (300) then receives the face count from the face detector 115 (330) and determines whether the face count is less than, equal to, or greater than the previous face count (335). If the face count is less than the previous face count (335<), this corresponds to a user looking away from the screen (becoming non-attentive) and the distraction or play index for that user is set or stored (340), and then content continues to play (305). If the face count is equal to the previous face count (335=) the attention status of the users has not changed and the content continues to play (305). If however the face count is greater than the last face count (335>) this corresponds to an additional face having been detected, and the method determines whether the additional face has been seen before - ie is a previously recognised face (345). This may be implemented by using a new database of users or faces for each media content playing session (eg movie viewing). If the newly detected face has not been seen before (345N), this corresponds to a completely new or unrecognised face joining the content viewing, for example a friend starting to watch a movie part way through. In this case the content continues to play (305) without offering user content control options. As before an alternative is to offer an option to rewind to the beginning of the content if the current position of the playing content is close to the beginning; or to offer a summary option.

If the face belongs to a user that has been previously recognised during playing of the current content (345N), this corresponds to a previously recognised user having already watched some of the content returning to watch the content after a period of non-attentiveness. In this case, the method (300) then gets the distraction index for the newly re-recognised face (350). The method then determines whether the last face count was greater than zero (355). If this is not the case (355N), this means there is only one user to consider, and the rewind button is shown (260). The method then returns to continue playing the content (305) and determines any user response to the rewind button at step (310). Note however that the distraction index used at step (315) will be the one obtained at step (350) for the respective recognised users.

If the last face count was greater than zero (355Y), this means that an additional previously recognised user has returned to view the screen 135 so that for example there are now two or more previously recognised users watching the screen. Upon re-recognising this previously recognised face, the method shows the summary button (365) before returning to continue playing the content (305). Determining whether the summary button has been actuated is then carried out at step (320) as previously described.

The following extension to the example situation outlined earlier illustrates the effect of the method (300) of figure 3. At half-time Andrew goes to the kitchen to get some beer, while Ben continues to watch the commentator's analysis before he too leaves to go the bathroom. When Andrew returns the television offers to rewind to where Andrew left. A short while later, when Ben returns a summary of the time he was away for is offered.

The system described in this scenario or second embodiment provides more complex behaviour than in the first embodiment. In this case it is able to distinguish between the faces of Andrew and Ben using the face recogniser and to offer a personalised service.

Whilst identifiers have been described as associated with user faces, in fact it is only necessary to identify the faces in a scene as previously seen or not and no explicit identity needs to be defined for each face. Where two faces are seen simultaneously, it can be assumed that these two faces have different identities.

Whilst full face recognition has been described, alternative attention detecting mechanisms could alternatively be used, for example the eye gaze or pupil tracking approach described with respect to WO2004084054. As a further alternative, parts of a face or various combinations of facial features may be used such as detecting and/or recognising eyes and a nose, a mouth and eyes or eyes and mouth and nose.

The camera 110 used may be provided with a light source (not shown) to illuminate the faces for detection and recognition. Alternatively the ambient lighting may be relied upon, as this will be contributed to by the content displayed on the screen 135. This may be complemented by using a long exposure time for each frame, in this regard it is helpful that viewer's tend to stay relatively motionless whilst watching video content. In addition various night mode and "camera-shake" facilities are already "built-in" to many digital cameras and can be used in this situation to improve the facial images provided to the face detector 115 and recogniser 120. Alternatively in order to simulate a long exposure, a sequence of images or frames can be summed such that each pixel in the resultant image is the sum of the luminance values in corresponding positions in the other frames. The summed images can then be used for face detection/recognition.

In order to minimise the number of "false positive" user attention status changes detected by the system, the face detector 115 or the attention interpreter 125 can be configured to only recognise a change of attention status after this has been confirmed on a number of subsequent face detections. For example after 10 image frames from the camera all indicate that there is one less or one more face than previously detected. This might be implemented in the method of figure 2 for example at step 235 by implementing an additional routine holding the "last face count" parameter to that noted at time x, then comparing the current "face count" parameter 10 times (once for each camera image say) at times x+1, x+2,...x+9, and then determining whether the average "face count" parameter is less than, greater than, or equal to the "last face count" parameter. Alternatively a statistical mode of the observations could be used to give an integer rather than a floating point number from the mean calculation.

As a further alternative, some face detection software packages can be configured to provide a confidence measure related to how confident the software module is that it has detected a face. This confidence measure or output can be used in an embodiment by the attention interpreter to decide when a face has become absent, for example by monitoring the confidence measure over time and detecting the absence of a face when the confidence measure drops below a predetermined threshold. In another alternative, detection of the absence of a face may only follow a characteristic temporal pattern such as a sharp drop-off in the confidence measure, rather than a gradual decline say which may be due to environmental changes.

The skilled person will recognise that the above-described apparatus and methods may be embodied as processor control code, for example on a carrier medium such as a disk, CD- or DVD-ROM, programmed memory such as read only memory (Firmware), or on a data carrier such as an optical or electrical signal carrier. For many applications embodiments of the invention will be implemented on a DSP (Digital Signal Processor), ASIC (Application Specific Integrated Circuit) or FPGA (Field Programmable Gate Array). Thus the code may comprise conventional programme code or microcode or, for example code for setting up or controlling an ASIC or FPGA. The code may also comprise code for dynamically configuring re-configurable apparatus such as re-programmable logic gate arrays. Similarly the code may comprise code for a hardware description language such as Verilog ^{™} or VHDL (Very high speed integrated circuit Hardware Description Language). As the skilled person will appreciate, the code may be distributed between a plurality of coupled components in communication with one another. Where appropriate, the embodiments may also be implemented using code running on a field-(re)programmable analogue array or similar device in order to configure analogue hardware.

The skilled person will also appreciate that the various embodiments and specific features described with respect to them could be freely combined with the other embodiments or their specifically described features in general accordance with the above teaching. The skilled person will also recognise that various alterations and modifications can be made to specific examples described without departing from the scope of the appended claims.

## Claims

1. Apparatus for playing media content, comprising:
means for detecting a user attention state and a user non-attention state;
means for playing the media content which is associated with a play index;
means for storing the play index of the media content being played in response to detecting a user non-attention state;
means for generating a user interface in response to detecting a user attention state following the detection of the user non-attention state;
wherein the playing means is arranged to re-play at least a part of the media content depending on the stored play index in response to receiving a user input from the user interface.

2. An apparatus as claimed in claim 1, wherein the means for detecting the user attention and non-attention states comprises means for detecting a face wherein detecting a user attention state comprises detecting a face and detecting a user non-attention state comprises detecting the absence of a previously detected face.

3. An apparatus according to claim 2, wherein the means for detecting a face comprises a camera and face detection software executed on a processor.

4. An apparatus according to claim 2 or 3, further comprising means for recognising a face detected by the face detection means, and wherein the means for generating a user interface is further arranged to generate a personalised user interface in response to recognising a previously absent face.

5. An apparatus according to claim 4, wherein the face recognising means comprises face recognition software executed on a processor and which maintains a database of recognised faces, the apparatus further arranged to associate separate stored play indexes with each recognised face.

6. An apparatus according to any one preceding claim, wherein the user interface comprises means for generating a user alert, and means for generating a control signal in response to the user input, the apparatus being responsive to the control signal to instruct the playing means to re-play the at least a part of the media content.

7. An apparatus according to claim 6, wherein the means for generating the user alert comprises means for displaying a user message on a display screen used by the playing means to display the media content.

8. An apparatus according to any one preceding claim, wherein the playing means is arranged to re-play all of the media content from a play index dependent on the stored play index.

9. An apparatus according to one of claims 1 to 7, wherein the playing means is arranged to play a summary of the media content from a play index dependent on the stored play index.

10. An apparatus according to any one preceding claim, wherein the means for playing media content comprises a display screen together with one or a combination of: a DVD player; a video player; a set-top box receiving an external broadcast; a media client for receiving streamed media; a hard disk drive.

11. A method of playing media content having a play index, the method comprising:
playing the media content in response to detecting a user attention state;
storing the current play index in response to detecting a user non-attention state;
generating a user interface associated with the stored play index in response to detecting a user attention state.

12. A method according to claim 11, wherein detecting a user attention state comprises detecting a face and detecting a user non-attention state comprises detecting the absence of a previously detected face.

13. A method according to claim 12, further comprising identifying each detected face and wherein a personalised user interface is generated each time a previously absent identified face is again detected.

14. A method according to any one of claims 11 to 13, further comprising re-playing at least part of the media content depending on the stored play index in response to receiving a user input from the generated user interface.

15. A method according to any one of claims 11 to 13, wherein the re-played media content is re-played as a summary of the media content from the stored play index.

16. A carrier medium carrying processor code which when executed on a processor causes the processor to carry out a method according to any one of claims 11 to 15.
